# EUROPEAN PATENT SPECIFICATION

(11) **EP 4 484 715 B1**
(45) Date of publication and mention of the grant of the patent: **02.12.2026**
(21) Application number: 24184283.0
(22) Date of filing: 25.06.2024
(51) Int. Cl.: F01D 17/08, F01D 21/00, F02C 7/04, G01M 15/14

(54) **METHOD OF GAS TURBINE ENGINE INLET DISTORTION PREDICTION AND MONITORING**
VERFAHREN ZUR VORHERSAGE UND ÜBERWACHUNG VON EINLASSVERZERRUNGEN EINES GASTURBINENTRIEBWERK
PROCÉDÉ DE PRÉDICTION ET DE SURVEILLANCE DE DISTORSION D'ENTRÉE DE MOTEUR À TURBINE À GAZ

(30) Priority: 28.06.2023 US 202318215432
(43) Date of publication of application: 01.01.2025
(73) Proprietor: RTX Corporation, Farmington, CT 06032 (US)
(72) Inventor: SIDELKOVSKIY, Dmitriy, Farmington, 06032 (US); MURPHY, Michael, Farmington, 06032 (US)
(74) Representative: Dehns

(56) References cited:
- EP-A1- 3 447 253
- JP-A- 2018 079 914
- US-A1- 2020 070 962
- US-A1- 2021 332 764

## Description

### TECHNICAL FIELD

This application relates to gas turbine engines, and more particularly to monitoring inlet airflow distortion of gas turbine engines for engine design and engine operability monitoring during engine bench tests, during flight tests, and/or in service.

### BACKGROUND

Gas turbine engines are known and typically include a fan delivering air into a bypass duct for propulsion. The fan also delivers air into a compressor where air is compressed and delivered into a combustor. The air is mixed with fuel and ignited. Products of this combustion pass downstream over turbine rotors driving them to rotate. The turbine rotors, in turn, rotate compressor rotors and the fan rotor.

An air vortex can arise between a surface (e.g., a ground plane, aircraft fuselage, or aircraft wing) and the engine inlet when the engine is operating on the ground in crosswind conditions. The air vortex may be propagated from the surface into the inlet duct, thereby creating inlet airflow distortion in front of the fan, which increase fan blades structural stress, and can also call engine gas dynamic instability.

It is known to quantity the magnitude of inlet airflow distortion using a distortion index such as IDCmax or DC60, as discussed in Bissinger, N. C., & Breuer, T. (2010). "Basic Principles - Gas Turbine Compatibility - Intake Aerodynamic Aspects." Encyclopedia of Aerospace Engineering, Volume 8, Chapter EAE487 and Seddon, J., & Goldsmith, E. L. (1985). "Intake aerodynamics." AIAA education series, New York.

In the prior art, determining the magnitude of inlet airflow distortion required the use of distortion probe rakes arranged circumferentially within a gas turbine engine taking measurements during actual operation of the gas turbine engine.

US 2020/070962 A1 describes a method to predict an onset of flow separation from a surface of an inner barrel of a nacelle. EP 3447253 A1 describes a fan stress tracking system for gas turbine engines.

### SUMMARY

A method of monitoring inlet airflow distortion of a gas turbine engine is provided in accordance with claim 1.

In an embodiment of the above, the inlet airflow static air pressure is an average of a plurality of inlet airflow static pressures corresponding to a plurality of rotational speeds of the fan.

In an embodiment according to any of the previous embodiments, during a simulated test of the gas turbine engine experiencing the set of crosswind conditions, the inlet airflow static air pressure at the reference area is determined based on an engine performance model.

In an embodiment according to any of the previous embodiments, the notification comprises an indication that a design of the fan is rejected.

In an embodiment according to any of the previous embodiments, during a bench test or actual runway procedure, the inlet airflow static pressure at the reference area is determined based on measured operational data from the gas turbine engine or its associated powerplant system.

In an embodiment according to any of the previous embodiments, the inlet airflow static air pressure is determined during runway operation of an aircraft that includes the gas turbine engine and is experiencing the set of crosswind conditions, and the inlet airflow distortion notification includes a recommendation to a pilot of an aircraft that includes the gas turbine engine to perform a rolling start takeoff.

In an embodiment according to any of the previous embodiments, during an actual runway procedure, the threshold is determined further based on a current runway speed of an aircraft that includes the gas turbine engine.

A system for a gas turbine engine is provided in accordance with claim 9.

In an embodiment of the above, the inlet airflow static air pressure is an average of a plurality of inlet airflow static pressures corresponding to a plurality of rotational speeds of the fan.

In an embodiment according to any of the previous embodiments, the processing circuitry is configured to, during a simulated test of the gas turbine engine experiencing the set of crosswind conditions, determine the inlet airflow static air pressure at the reference area based on an engine performance model.

In an embodiment according to any of the previous embodiments, the notification comprises an indication that a design of the fan is rejected.

In an embodiment according to any of the previous embodiments, the processing circuitry is configured to, during a bench test or actual runway procedure, determine the inlet airflow static pressure at the reference area based on measured operational data from the gas turbine engine or its associated powerplant system.

In an embodiment according to any of the previous embodiments, the inlet airflow static air pressure is determined during runway operation of an aircraft that includes the gas turbine engine and is experiencing the set of crosswind conditions. The inlet airflow distortion notification includes a recommendation to a pilot of an aircraft that includes the gas turbine engine to perform a rolling start takeoff.

In an embodiment according to any of the previous embodiments, the processing circuitry is configured to, during an actual runway procedure, determine the threshold further based on a current runway speed of an aircraft that includes the gas turbine engine.

In an embodiment according to any of the previous embodiments of the method or system, the calculating is based on a square of a ratio between an inlet airflow static air pressure at the reference area and a total ambient air pressure.

### BRIEF DESCRIPTION OF THE DRAWINGS

Figure 1 is a schematic view of an example gas turbine engine.
Figure 2 is a schematic view of an air vortex traveling into the gas turbine engine of Figure 1.
Figure 3 is a graph that illustrates the effects of an air vortex on inlet airflow distortion.
Figure 4 is graph that illustrates air vortex minimum pressures near the center of an air vortex core, to illustrate found air vortex phenomena.
Figure 5 schematically illustrates a flowchart that demonstrates an air vortex inlet prediction method for engine components during a design iteration loop.
Figure 6 schematically illustrates a flowchart that describes implementation of the method of Figure 5 during an engine bench test.
Figure 7 schematically illustrates a flowchart that describes implementation of the method of Figure 5 during an aircraft flight test.
Figure 8 schematically illustrates an example computing device that may be used to perform steps of the flowcharts of Figures 5-7.

### DETAILED DESCRIPTION

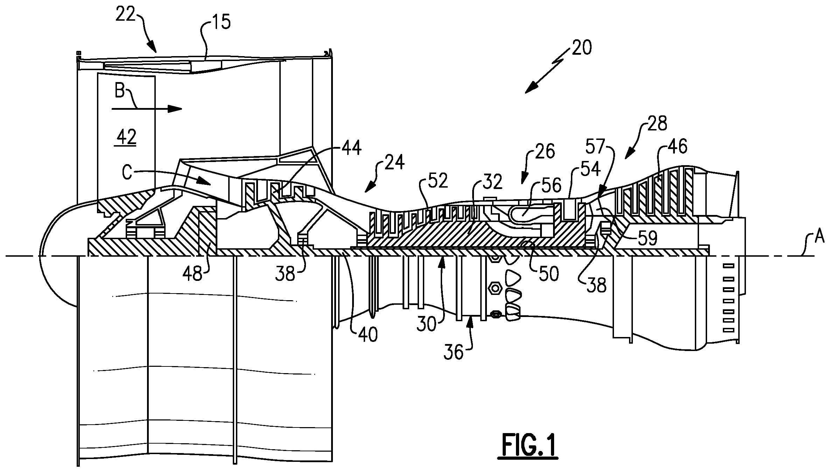

Figure 1 schematically illustrates a gas turbine engine 20. The gas turbine engine 20 is disclosed herein as a two-spool turbofan that generally incorporates a fan section 22, a compressor section 24, a combustor section 26, and a turbine section 28. Alternative engines might include an augmentor section (not shown) among other systems or features. The fan section 22 drives air along a bypass flow path B in a bypass duct defined within a fan case 15, and also drives air along a core flow path C for compression and communication into the combustor section 26 then expansion through the turbine section 28. Although depicted as a two-spool turbofan gas turbine engine in the disclosed non-limiting embodiment, it should be understood that the concepts described herein are not limited to use with two-spool turbofans as the teachings may be applied to other types of turbine engines including three-spool architectures.

The exemplary engine 20 generally includes a low speed spool 30 and a high speed spool 32 mounted for rotation about an engine central longitudinal axis A relative to an engine static structure 36 via several bearing systems 38. It should be understood that various bearing systems 38 at various locations may alternatively or additionally be provided, and the location of bearing systems 38 may be varied as appropriate to the application.

The low speed spool 30 generally includes an inner shaft 40 that interconnects a fan 42, a first (or low) pressure compressor 44 and a first (or low) pressure turbine 46. The inner shaft 40 is connected to the fan 42 through a speed change mechanism, which in exemplary gas turbine engine 20 is illustrated as a geared architecture 48 to drive the fan 42 at a lower speed than the low speed spool 30. The high speed spool 32 includes an outer shaft 50 that interconnects a second (or high) pressure compressor 52 and a second (or high) pressure turbine 54. A combustor 56 is arranged in exemplary gas turbine 20 between the high pressure compressor 52 and the high pressure turbine 54. A mid-turbine frame 57 of the engine static structure 36 is arranged generally between the high pressure turbine 54 and the low pressure turbine 46. The mid-turbine frame 57 further supports bearing systems 38 in the turbine section 28. The inner shaft 40 and the outer shaft 50 are concentric and rotate via bearing systems 38 about the engine central longitudinal axis A which is collinear with their longitudinal axes.

The core airflow is compressed by the low pressure compressor 44 then the high pressure compressor 52, mixed and burned with fuel in the combustor 56, then expanded over the high pressure turbine 54 and low pressure turbine 46. The mid-turbine frame 57 includes airfoils 59 which are in the core airflow path C. The turbines 46, 54 rotationally drive the respective low speed spool 30 and high speed spool 32 in response to the expansion. It will be appreciated that each of the positions of the fan section 22, compressor section 24, combustor section 26, turbine section 28, and fan drive gear system 48 may be varied. For example, gear system 48 may be located aft of combustor section 26 or even aft of turbine section 28, and fan section 22 may be positioned forward or aft of the location of gear system 48.

The engine 20 in one example is a high-bypass geared aircraft engine. In a further example, the engine 20 bypass ratio is greater than about six (6), with an example embodiment being greater than about ten (10), the geared architecture 48 is an epicyclic gear train, such as a planetary gear system or other gear system, with a gear reduction ratio of greater than about 2.3 and the low pressure turbine 46 has a pressure ratio that is greater than about five. In one disclosed embodiment, the engine 20 bypass ratio is greater than about ten (10:1), the fan diameter is significantly larger than that of the low pressure compressor 44, and the low pressure turbine 46 has a pressure ratio that is greater than about five 5:1. Low pressure turbine 46 pressure ratio is pressure measured prior to inlet of low pressure turbine 46 as related to the pressure at the outlet of the low pressure turbine 46 prior to an exhaust nozzle. The geared architecture 48 may be an epicycle gear train, such as a planetary gear system or other gear system, with a gear reduction ratio of greater than about 2.3:1. It should be understood, however, that the above parameters are only exemplary of one embodiment of a geared architecture engine and that the present invention is applicable to other gas turbine engines including direct drive turbofans.

A significant amount of thrust is provided by the bypass flow B due to the high bypass ratio. The fan section 22 of the engine 20 is designed for a particular flight condition -- typically cruise at about 0.8 Mach and about 35,000 feet (10,668 meters). The flight condition of 0.8 Mach and 35,000 ft (10,668 meters), with the engine at its best fuel consumption - also known as "bucket cruise Thrust Specific Fuel Consumption ('TSFC')" - is the industry standard parameter of lbm of fuel being burned divided by lbf of thrust the engine produces at that minimum point. "Low fan pressure ratio" is the pressure ratio across the fan blade alone, without a Fan Exit Guide Vane ("FEGV") system. The low fan pressure ratio as disclosed herein according to one non-limiting embodiment is less than about 1.45. "Low corrected fan tip speed" is the actual fan tip speed in ft/sec divided by an industry standard temperature correction of [(Tram °R) / (518.7 °R)]^{0.5} (where °R x 5/9 = °K).

The "Low corrected fan tip speed" as disclosed herein according to one non-limiting embodiment is less than about 1150 ft / second (350.5 meters/second).

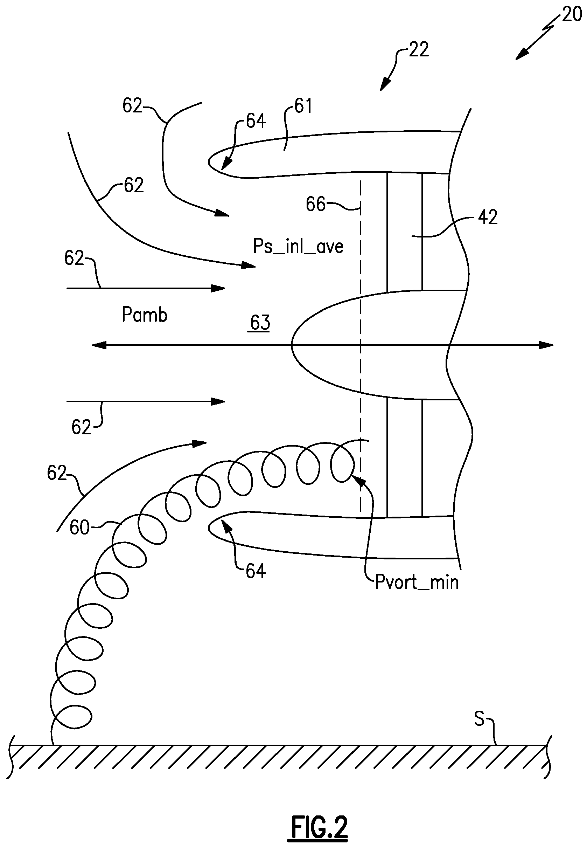

Figure 2 is a schematic view of an air vortex 60 that arises between surface S (e.g., the ground, an aircraft fuselage, or aircraft wing) and an inlet of the gas turbine engine. The air vortex 60 is caused by crosswind and travels into the gas turbine engine 20, and is provoked by interference between engine airflow and the surface S. The air vortex 60 travels along with typical inlet airflow streamlines 62 into and within an airflow duct 63, to a reference section 66 in front of the fan 42 of the gas turbine engine 20, and travels towards the fan 42. The airflow duct 63 is at least partially defined by an inlet 61, which attaches to the fan case 15, or may be part of the fan case 15. The inlet 61 includes inlet lips 64 that will be discussed further below. The reference section 66 shown in Figure 2 is an example, and it is understood that other reference sections in front of the fan 42 and within the inlet 61 could be used. As used herein, "in front of the fan" means fore of the fan 42 (i.e., towards a left side of Figure 2).

In Figure 2, *Pamb* corresponds to a total ambient air pressure, and *Ps inl ave* corresponds to an average (or "mean") static air pressure in the reference section 66 in front of the fan 42 that is averaged for the reference area 66 at each engine rotational speed inlet corrected airflow, accordingly (e.g., in a plane in the reference area that is perpendicular to axis A). The total ambient pressure *Pamb* is a function of an ambient pressure in front of the fan 42 and air pressure introduced by aircraft speed *VCAS* (if the aircraft is moving). The mean static air pressure *Ps inl ave* can be defined either by averaging measured data (e.g., obtained, for instance, from static pressure tapes, arranged circumferentially in the airflow duct 63 on a duct outer diameter wall surface at the reference section 66, or can be defined by using predetermined engine performance airflow data in the reference section 66. The *Pvort_min* is minimum pressure in the vortex 60 at the reference section 66.

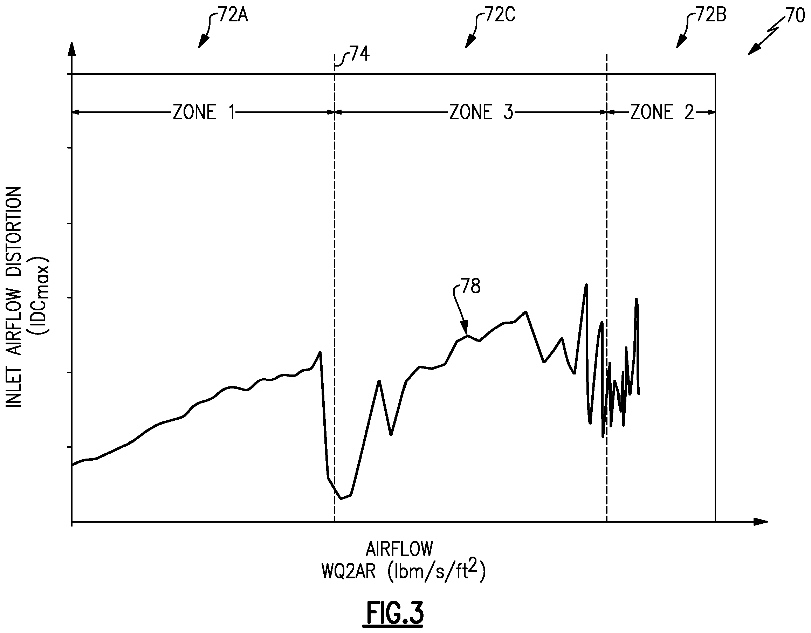

Figure 3 is a graph that illustrates the effects of the air vortex 60 on inlet airflow distortion. The y-axis represents inlet airflow distortion according to the IDCmax distortion index discussed above, and the x-axis represents an inlet engine corrected airflow, normalized to the reference section 66 area, that corresponds to an engine power setting (WQ2AR measured in lbm/s/ft²).

There are three distinctive zones on the chart 70, namely Zone 1 (72A), Zone 2 (72B), and Zone 3 (72C). During Zone 1, the gas turbine engine 20 is operating on a low power setting , and there is an initial airflow separation on the inlet 64 lips of the gas turbine engine 20, followed by reattachment at 74 when engine power increases.

The "separation" refers to the capture stream, so there are zones of inlet airflow separation, and the "reattachment" on Figure 3. The x-axis airflow value at which the reattachment event 74 occurs depends on crosswind speed.

Inlet separation Zone 2 (72B) on the graph 70 occurs during an engine high power setting, where there can again be airflow separation on the inlet lips 64 surface. The engine high power inlet airflow separation is most important for engine operability, and is generally not allowable in service. The inlet lips 64 and inlet 61 are shaped to avoid inlet airflow separation for Zone 2 at the engine high power setting during crosswind conditions.

Zone 3 (72C) is in the range between lower and high engine power inlet airflow separation zones, and commences after airflow reattachment point at 74. During Zone 3, air vortex distortions 78 occur, and are the dominant source of distortion. Although an air vortex 60 can be formed in Zone 1 and the Zone 2, where there is inlet airflow separation, inlet distortion from the air vortex 60 itself is not the dominant source of distortion in Zone 1 or Zone 2.

Traditionally, distortion probe rakes have been necessary to detect air vortex distortions during Zone 3, but the techniques discussed below do not have this requirement. In particular, the techniques discussed herein allow for prediction, designing, and engine validation work stages without requiring distortion probe rake measurements.

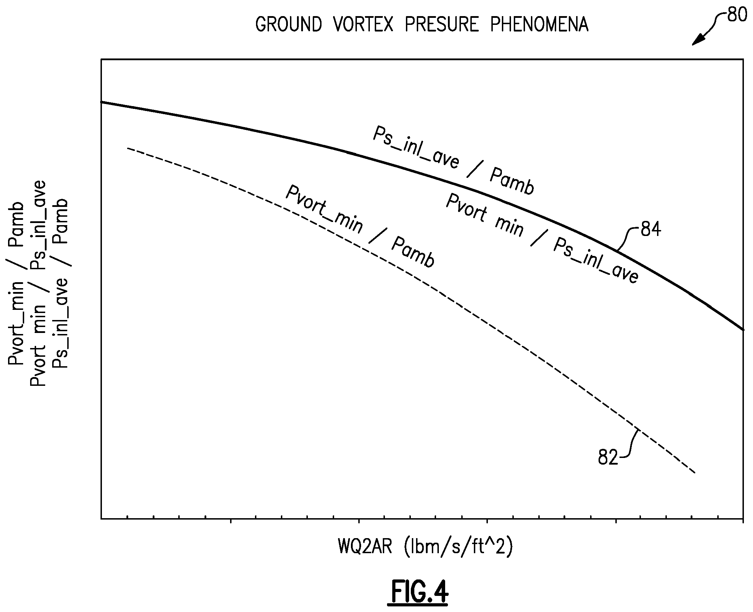

Figure 4 is graph that illustrates air vortex minimum pressures near the center of an air vortex core, to illustrate found air vortex phenomena. Figure 4 contains two lines 82, 84 on the chart, formed by three data sets of measured pressures test points described below, each corresponding to Zone 3 (72C) of Figure 3 at crosswind speeds of 15-30 knots.

Line 82 interpolates a first data set (*Pvort_min* / *Pamb*)*,* which represents pressures measured near the center of the vortex 64 at reference section in front of fan (*Pvort_min),* and normalized by a total ambient pressure (*Pamb*)*.*

Line 84 interpolates a second data set and a third data. The second data set (*Ps_inl_ave* / *Pamb*) represents an average static pressure in reference section in front of fan (*Ps_inl_ave*), normalized by total ambient pressure (*Pamb*)*.*

The third data set (*Pvort_min* / *Ps_inl_ave*) represents a ratio of the pressure near center of vortex in reference section (*Pvort_min*) and an average static pressure in the reference section (*Ps_inl_ave*)*.* This coincidence represents found air vortex pressure phenomena discussed in equations 1 and 2 below, which summarize a relationship between a minimum air pressure in the air vortex 60 (*Pvort_min*) and the terms *Ps inl ave* and the *Pamb.* $\frac{Pvort _ min}{Ps _ inl _ ave} = \frac{Ps _ inl _ ave}{Pamb}$ equation 1 $\frac{Pvort _ min}{Pamb} = {\left(\frac{Ps _ inl _ ave}{Pamb}\right)}^{2}$ equation 2

In both equations 1 and 2, the term *Pamb* normalizes *Ps_inl_ave.* Although a power of 2 is shown in equation 2, it is understood that this is an example, and that another power could be used in the range of 1.98 - 2.02.

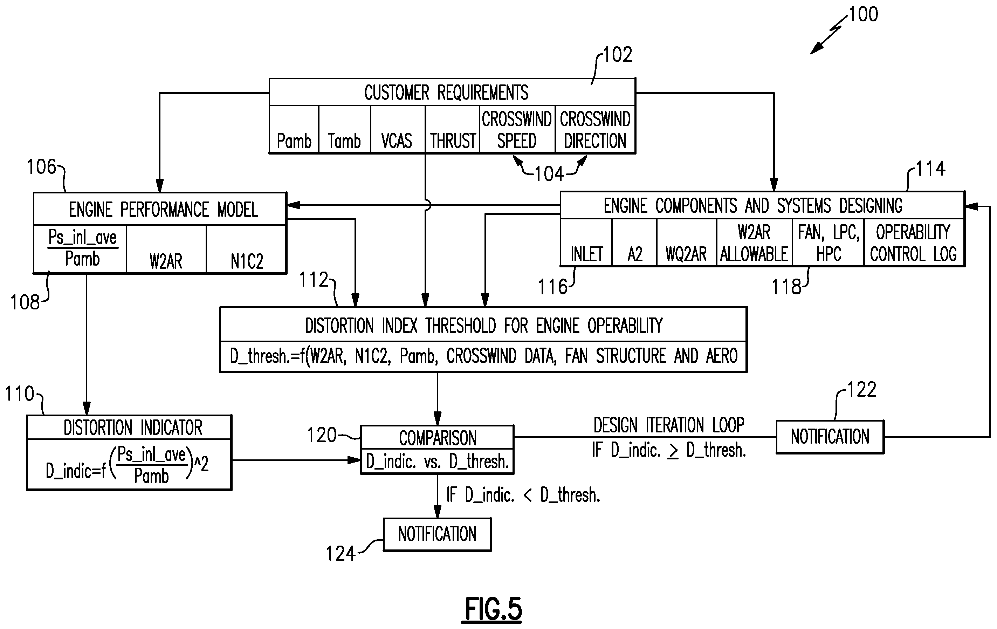

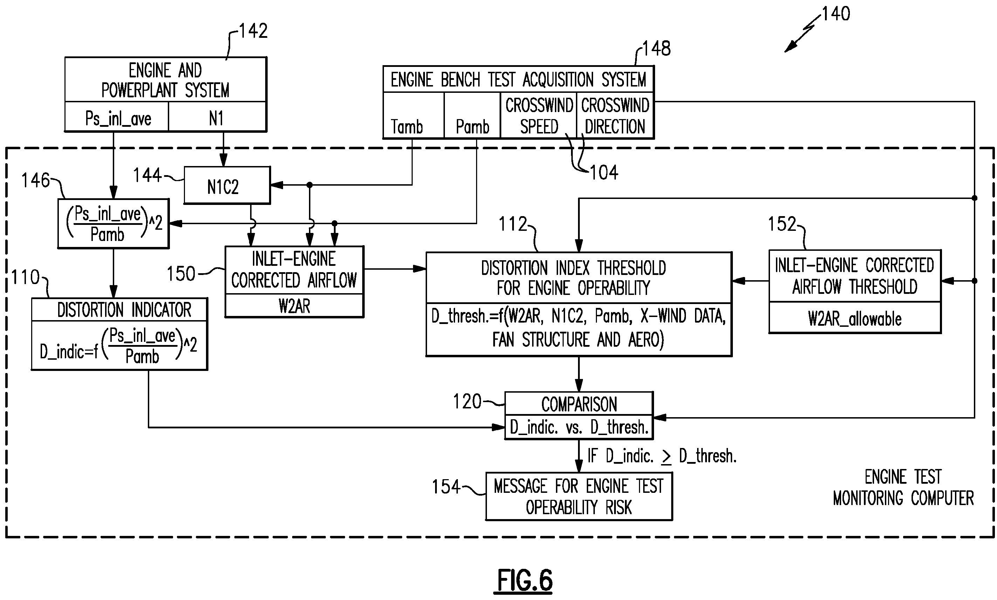

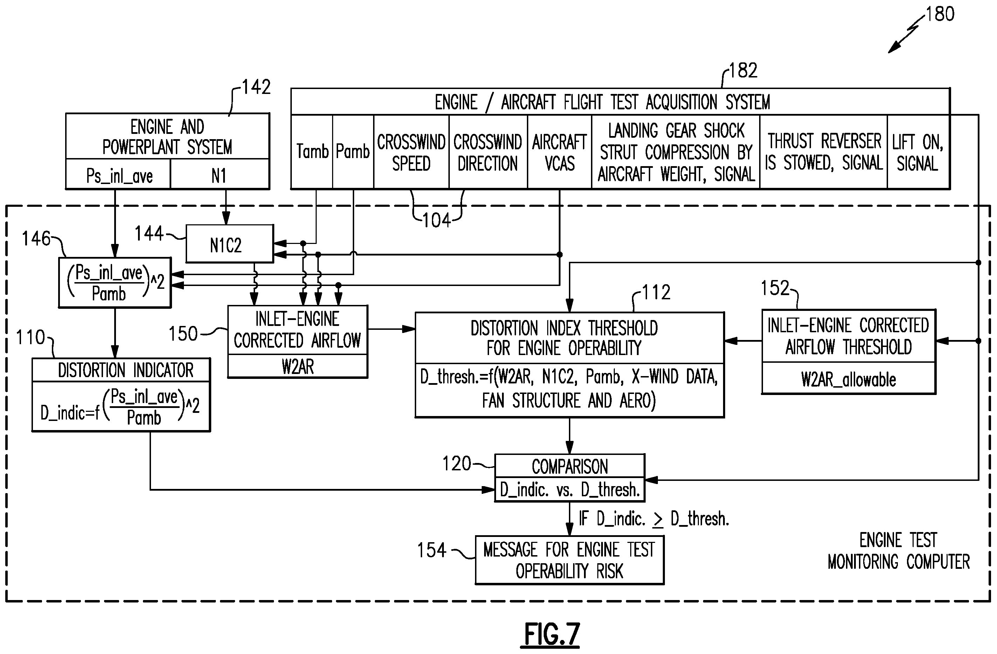

The relationships represented in equations 1 and 2 can be applied to create a method of air vortex inlet distortion prediction for engine designing (Figure 5), as well as for engine operability monitoring during engine bench test (Figure 6), and flight tests and in service (Figure 7).

Figure 5 schematically illustrates a flowchart 100 that demonstrates an air vortex inlet prediction method for engine components during a design iteration loop. Customer requirements 102 are received that describe requirements and required operating conditions of a gas turbine engine 12. The customer requirements include *Pamb,* an ambient temperature *Tamb,* an aircraft speed *VCAS* (e.g., runway speed), thrust requirements, and a set of crosswind conditions 104 that includes a crosswind speed and a crosswind direction relative to the gas turbine engine 20. Aircraft speed *VCAS* is relevant because increased runway speed can diminish, or if sufficiently high, eliminate the effects of an air vortex.

An engine performance model 106 models the performance of the gas turbine engine 20, and outputs three values: a ratio 108 between *Ps inl ave* and *Pamb, W2AR,* and *N1C2. Ps_inl_ave* was introduced above in Figure 2, and corresponds to an average static air pressure in a reference area 66 of the fan section 22. *W2AR* corresponds to an airflow in the airflow duct 63 corrected to reference section 66 airflow parameters. *NIC2* which corresponds to a rotational speed (N1) of the fan 42 or low pressure compressor 44, corrected to inlet airflow parameters in reference area 66.

A distortion indicator *D indic* is determined at 110 as a function of the square of the ratio 108. Thus *D indic* is a function of a minimum pressure near a center of the air vortex 60 defined via function of ratio 108. The distortion indicator *D indic* was found by the inventors to closely correlate with crosswind inlet model test data as measured by pressure probe rakes, and by comparison of the indicator with distortion, obtained during an engine test, and to provide a suitable alternative to using such rakes.

Referring again to Figure 5, a threshold *D thresh* represents a permissible amount of inlet airflow distortion at the reference area 66 for the set of crosswind conditions 104 (also shown as "crosswind data" in Figure 5). *D_thresh* is determined at 112 as a function of *W2AR, N1C2*, *Pamb,* the set of cross wind conditions 104, and the structural design and aerodynamic stability of the fan 42, based on a predetermined distortion threshold matrix (e.g., a lookup table). *D thresh* is also based on predetermined inlet distortion limits for the fan 42, low pressure compressor 44, and high pressure compressor 52 (as represented by *W2AR allowable* below). In one or more embodiments, the distortion threshold value corresponds to an allowable fan structural Goodman value, which does not exceed 100%.

To elaborate, the structure and aerodynamics of the fan 42 are represented by a set of engine components and system design features shown at 114, which includes an inlet configuration 116, a cross section of the reference area 66 in front of fan *A2, WQ2AR* (discussed above), *W2AR allowable,* a design 118 of the fan 42, low pressure compressor 44 and high pressure compressor 52, and an operability control logic that affects one or more control parameters (e.g., RPM, valve position, etc.). *W2AR allowable* represents a predetermined engine high power corrected airflow at which the airflow of the airflow duct 63 is separation free. The airflow depends on the inlet configuration 116, *N1C2, Pamb, Tamb, VCAS,* and the set of crosswind conditions 104. In one example, the regular inlet non-dimensional corrected allowable airflow, normalized to the reference area 66 in front of the fan 42 (WQ2AR), is not higher than 46 lbm/s/ft² (~2,200 Pa.s or kg/(m.s) ) .

A comparison 120 is performed between *D_indic* and *D_thresh.* Based on the comparison 120 indicating that *D_indic* exceeds *D_thresh*, a first type of inlet airflow distortion notification 122 is provided, which may serve as an indication that the gas turbine engine design 114 is rejected. Based on the comparison 120 indicating that *D indic* is below *D thresh,* a second of inlet airflow distortion notification 124 is provided, which may serve as an indication that the gas turbine engine design 114 is approved.

Figure 6 schematically illustrates a flowchart 140 that describes implementation of the method of Figure 5 during an engine bench test. During such a bench test, a crosswind generator may be used to simulate actual crosswind conditions on the ground. In this example, the values *Ps inl ave* and *N1* are provided from the gas turbine engine 20 and/or its associated powerplant system 142, instead of being derived from the engine performance model 106.

*N1* is corrected to *N1C2* at 144, and *Ps inl ave* is utilized to obtain and square the ratio 108 from Figure 5 at 146 (or use another power in the range 1.98 - 2.02, as discussed above). The distortion indicator *D indic* is obtained at 110 based on the square of the ratio 108.

An engine bench test acquisition system 148 is used to obtain ambient temperature *Tamb,* ambient pressure *Pamb,* and the set of crosswind conditions 104. *Tamb* is used to determine *N1C2* at 144, and *Pamb* is used to determine the square of the ratio 108 at 146. *N1C2, Tamb,* and *Pamb* are used to obtain the airflow *W2AR* in the airflow duct 63 at 150. As in Figure 5, *D thresh* is determined at 112 as a function of *W2AR, N1C2, Pamb,* the set of cross wind conditions 104, and the structure and aerodynamics of the fan 22.

The inlet-corrected airflow threshold *W2AR allowable* (at which the airflow of the airflow duct 63 is separation free) is determined at 152 based on the data from the engine bench test acquisition system 148.

*D_indic* is compared to *D_thresh* at 120, and if *D_indic* exceeds *D thresh,* an inlet airflow distortion notification is provided at 154 to indicate an engine test operability risk (e.g., that a design of the fan 42 is rejected). As shown in Figure 6, an engine test monitoring computer may be used to perform the various steps enclosed within the dotted lines.

Figure 7 schematically illustrates a flowchart 180 that describes implementation of the method of Figure 5 during an aircraft flight test. The flowchart 180 is similar to the flowchart 140 with a handful of differences, most notably that the speed *VCAS* is obtained from an engine / aircraft flight test acquisition system 182, and is used to determine *N1C2* at 144 and to determine the square of the ratio 108 at 146. Here, the set of crosswind conditions 104 are obtained from one or more sensors. *VCAS* is zero during a bench test, so it was not used in the flowchart 140 of Figure 6. Another difference from the flowchart 140 is that the flowchart 180 uses additional system inputs, identified with reference numeral 182, as compared to the inputs to the flowchart 140.

In one example, the notification 154 in the flowchart 180 includes a recommendation to a pilot to perform a rolling start, to mitigate the effects of an air vortex on the fan 42 and gas turbine engine 20.

In one example, the notification 154 is only provided if the following conditions are also true:
- *W2AR < W2AR allowable,*
- *VCAS < VCAS_rolling_start* (a rolling start runway speed that is at least 35 knots),
- The landing gear strut compression signal is ON (indicating that an aircraft that includes the gas turbine engine 20 is on the ground) (see 182 in Figure 7),
- a Lift ON signal is ON (see 182 in Figure 7), which is indicative of a flight condition (e.g., take-off or landing), and
- a thrust reverser stowed signal is ON (see 182 in Figure 7).

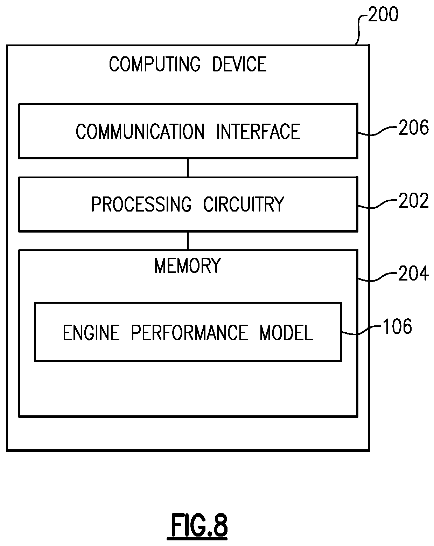

Figure 8 schematically illustrates an example computing device 200 that may be used to perform steps of the flowcharts of Figures 5-7. The computing device 200 includes processing circuitry 202 operatively connected to memory 204 and a communication interface 206. The processing circuitry 202 may include one or more microprocessors, microcontrollers, application specific integrated circuits (ASICs), or the like, for example.

The memory 204 can include any one or combination of volatile memory elements (e.g., random access memory (RAM, such as DRAM, SRAM, SDRAM, VRAM, etc.)) and/or nonvolatile memory elements (e.g., ROM, hard drive, tape, CD-ROM, etc.). Moreover, the memory 204 may incorporate electronic, magnetic, optical, and/or other types of storage media. The memory 204 can also have a distributed architecture, where various components are situated remotely from one another, but can be accessed by the processing circuitry 202. The memory 204 may be used to store the engine performance model 106 of Figure 5, for example.

The communication interface 206 is configured to facilitate communication between the computing device 200 and other devices (e.g., sensors associated with the gas turbine engine, to receive measurements such as *Pamb, Tamb,* etc.). The computing device 200 may be configured to perform some or all of any of the steps of the flowcharts 100, 140, 180.

The techniques discussed herein for assessing inlet airflow distortion offer improvements over the prior art, as detailed inlet duct flow field pressure measurements are not required. As a result, gas turbine engine 20 design validation can be performed more efficiently, saving time and reducing cost.

## Claims

1. A method of monitoring inlet airflow distortion of a gas turbine engine, comprising:
calculating an inlet airflow distortion value at a reference area (66) within an airflow duct (63) of a gas turbine engine (20) and in front of a fan (42) of the gas turbine engine (20), the inlet airflow distortion value indicative of an air pressure of an air vortex (60) at the reference area (66) caused by a set of crosswind conditions (104), said calculating based on a ratio (108) between an inlet airflow static air pressure (*Ps_inl_ave*) in the reference area (66) and a total ambient air pressure (*Pamb*);
comparing the inlet airflow distortion value to a threshold *(D thresh)* corresponding to a permissible amount of inlet airflow distortion at the reference area (66) for the set of crosswind conditions (104); and
based on the comparison (120) indicating that the inlet airflow distortion exceeds the threshold *(D thresh),* providing an inlet airflow distortion notification (122); **characterized in that**
the threshold (*D_thresh*) is determined based on the set of crosswind conditions (104), a magnitude of airflow to the fan (42), and a rotational speed of a component of the gas turbine engine (20).

2. The method of claim 1, wherein the inlet airflow static air pressure (*Ps_inl_ave*) is an average of a plurality of inlet airflow static pressures corresponding to a plurality of rotational speeds (N1) of the fan (42).

3. The method of claim 1 or 2, wherein during a simulated test of the gas turbine engine (20) experiencing the set of crosswind conditions (104), the inlet airflow static air pressure (*Ps_inl_ave*) at the reference area (66) is determined based on an engine performance model (106).

4. The method of any preceding claim, wherein the notification (122) comprises an indication that a design of the fan (42) is rejected.

5. The method of any preceding claim, wherein during a bench test or actual runway procedure, the inlet airflow static pressure at the reference area (66) is determined based on measured operational data from the gas turbine engine (20) or its associated powerplant system (142).

6. The method of any preceding claim, wherein:
the inlet airflow static air pressure (*Ps_inl_ave*) is determined during runway operation of an aircraft that includes the gas turbine engine (20) and is experiencing the set of crosswind conditions (104); and
the inlet airflow distortion notification (122) includes a recommendation to a pilot of an aircraft that includes the gas turbine engine (20) to perform a rolling start takeoff.

7. The method of any preceding claim, wherein during an actual runway procedure, the threshold *(D thresh)* is determined further based on a current runway speed of an aircraft that includes the gas turbine engine (20).

8. The method of any preceding claim wherein calculating the inlet airflow distortion value at a reference area (66) is based on a square of a ratio (108) between an inlet airflow static air pressure (*Ps_inl_ave*) at the reference area (66) and a total ambient air pressure (*Pamb*)*.*

9. A system of monitoring inlet airflow distortion of a gas turbine engine, comprising:
processing circuitry (202) operatively connected to memory (204), the processing circuitry (202) configured to:
calculate an inlet airflow distortion value at a reference area (66) within an airflow duct (63) of a gas turbine engine (20) and in front of a fan (42) of the gas turbine engine (20), the inlet airflow distortion value indicative of an air pressure of an air vortex (60) at the reference area (66) caused by a set of crosswind conditions (104), the calculation based on a ratio (108) between an inlet airflow static air pressure (*Ps_inl_ave*) at the reference area (66) and a total ambient air pressure (*Pamb*);
compare the inlet airflow distortion value to a threshold *(D thresh)* corresponding to a permissible amount of inlet airflow distortion at the reference area (66) for the set of crosswind conditions (104); and
based on the comparison (120) indicating that the inlet airflow distortion exceeds the threshold *(D thresh),* provide an inlet airflow distortion notification (122); and
**characterized in that**
the processing circuitry (202) is further configured to:
determine the threshold (D_thresh) based on the set of crosswind conditions (104), a magnitude of airflow to the fan (42), and a rotational speed of a component of the gas turbine engine (20).

10. The system of claim 9, wherein the inlet airflow static air pressure (*Ps_inl_ave*) is an average of a plurality of inlet airflow static pressures corresponding to a plurality of rotational speeds (N1) of the fan (42).

11. The system of claim 9 or 10, wherein the processing circuitry (202) is configured to:
during a simulated test of the gas turbine engine (20) experiencing the set of crosswind conditions (104), determine the inlet airflow static air pressure (*Ps_inl_ave*) at the reference area (66) based on an engine performance model (106).

12. The system of any of claims 9 to 11, wherein the processing circuitry (202) is configured to:
during a bench test or actual runway procedure, determine the inlet airflow static pressure at the reference area (66) based on measured operational data from the gas turbine engine (20) or its associated powerplant system (142).

13. The system of any of claims 9 or 12, wherein the notification (122) comprises an indication that a design of the fan (42) is rejected.

14. The system of any of claims 9 to 13, wherein:
the inlet airflow static air pressure (*Ps_inl_ave*) is determined during runway operation of an aircraft that includes the gas turbine engine (20) and is experiencing the set of crosswind conditions (104); and
the inlet airflow distortion notification (122) includes a recommendation to a pilot of an aircraft that includes the gas turbine engine (20) to perform a rolling start takeoff.

15. The system of any of claims 9 to 14, wherein the processing circuitry (202) is configured to, during an actual runway procedure, determine the threshold *(D thresh)* further based on a current runway speed of an aircraft that includes the gas turbine engine (20).

## Patentansprüche

1. Verfahren zur Überwachung von Einlassluftstromverzerrung eines Gasturbinentriebwerks, umfassend:
Berechnen eines Einlassluftstromverzerrungswertes an einem Referenzbereich (66) innerhalb eines Luftstromkanals (63) eines Gasturbinentriebwerks (20) und vor einem Fan (42) des Gasturbinentriebwerks (20), wobei der Einlassluftstromverzerrungswert einen Luftdruck eines Luftwirbels (60) am Referenzbereich (66) angibt, der durch einen Satz von Seitenwindbedingungen (104) verursacht wird, wobei das Berechnen auf einem Verhältnis (108) zwischen einem statischen Einlassluftstromdruck (Ps_inl_ave) im Referenzbereich (66) und einem Gesamtumgebungsluftdruck (Pamb) basiert;
Vergleichen des Einlassluftstromverzerrungswertes mit einem Schwellenwert (D_thresh), der einer zulässigen Menge an Einlassluftstromverzerrung am Referenzbereich (66) für den Satz von Seitenwindbedingungen (104) entspricht; und
basierend auf dem Vergleich (120), der anzeigt, dass die Einlassluftstromverzerrung den Schwellenwert (D_thresh) überschreitet, Bereitstellen einer Einlassluftstromverzerrungsbenachrichtigung (122); **dadurch gekennzeichnet, dass** der Schwellenwert (D_thresh) basierend auf dem Satz von Seitenwindbedingungen (104), einer Größe des Luftstroms zum Fan (42) und einer Drehzahl einer Komponente des Gasturbinentriebwerks (20) bestimmt wird.

2. Verfahren nach Anspruch 1, wobei der statische Einlassluftstromdruck (Ps_inl_ave) ein Durchschnitt aus einer Vielzahl von statischen Einlassluftströmungsdrücken ist, die einer Vielzahl von Drehzahlen (N1) des Fans (42) entsprechen.

3. Verfahren nach Anspruch 1 oder 2, wobei während eines simulierten Tests des Gasturbinentriebwerks (20), das dem Satz von Seitenwindbedingungen (104) ausgesetzt ist, der statische Einlassluftstromdruck (Ps_inl_ave) am Referenzbereich (66) basierend auf einem Triebwerksleistungsmodell (106) bestimmt wird.

4. Verfahren nach einem der vorhergehenden Ansprüche, wobei die Benachrichtigung (122) eine Angabe umfasst, dass ein Design des Fans (42) abgelehnt wird.

5. Verfahren nach einem der vorhergehenden Ansprüche, wobei während eines Prüfstandtests oder eines tatsächlichen Rollbahnverfahrens der statische Einlassluftstromdruck am Referenzbereich (66) basierend auf gemessenen Betriebsdaten des Gasturbinentriebwerks (20) oder dessen zugehörigem Antriebssystem (142) bestimmt wird.

6. Verfahren nach einem der vorhergehenden Ansprüche, wobei:
der statische Einlassluftstromdruck (Ps_inl_ave) während des Rollbahnbetriebs eines Luftfahrzeugs bestimmt wird, das das Gasturbinentriebwerk (20) umfasst und dem Satz von Seitenwindbedingungen (104) ausgesetzt ist; und
die Einlassluftstromverzerrungsbenachrichtigung (122) eine Empfehlung an einen Piloten eines Luftfahrzeugs, das das Gasturbinentriebwerk (20) umfasst, enthält, einen Rollstart-Takeoff durchzuführen.

7. Verfahren nach einem der vorhergehenden Ansprüche, wobei während eines tatsächlichen Rollbahnverfahrens der Schwellenwert (D_thresh) ferner basierend auf einer aktuellen Rollbahngeschwindigkeit eines Luftfahrzeugs bestimmt wird, das das Gasturbinentriebwerk (20) umfasst.

8. Verfahren nach einem der vorhergehenden Ansprüche, wobei das Berechnen des Einlassluftstromverzerrungswertes an einem Referenzbereich (66) auf einem Quadrat eines Verhältnisses (108) zwischen einem statischen Einlassluftstromdruck (Ps_inl_ave) am Referenzbereich (66) und einem Gesamtumgebungsluftdruck (Pamb) basiert.

9. System zur Überwachung von Einlassluftstromverzerrung eines Gasturbinentriebwerks, umfassend:
eine Verarbeitungsschaltung (202), die mit einem Speicher (204) betriebsmäßig verbunden ist, wobei die Verarbeitungsschaltung (202) konfiguriert ist zum:
Berechnen eines Einlassluftstromverzerrungswertes an einem Referenzbereich (66) innerhalb eines Luftstromkanals (63) eines Gasturbinentriebwerks (20) und vor einem Fan (42) des Gasturbinentriebwerks (20), wobei der Einlassluftstromverzerrungswert einen Luftdruck eines Luftwirbels (60) am Referenzbereich (66) angibt, der durch einen Satz von Seitenwindbedingungen (104) verursacht wird, wobei die Berechnung auf einem Verhältnis (108) zwischen einem statischen Einlassluftstromdruck (Ps_inl_ave) am Referenzbereich (66) und einem Gesamtumgebungsluftdruck (Pamb) basiert;
Vergleichen des Einlassluftstromverzerrungswertes mit einem Schwellenwert (D_thresh), der einer zulässigen Menge an Einlassluftstromverzerrung am Referenzbereich (66) für den Satz von Seitenwindbedingungen (104) entspricht; und
basierend auf dem Vergleich (120), der anzeigt, dass die Einlassluftstromverzerrung den Schwellenwert (D_thresh) überschreitet, Bereitstellen einer Einlassluftstromverzerrungsbenachrichtigung (122); und
**dadurch gekennzeichnet, dass** die Verarbeitungsschaltung (202) ferner konfiguriert ist zum:
Bestimmen des Schwellenwertes (D_thresh) basierend auf dem Satz von Seitenwindbedingungen (104), einer Größe des Luftstroms zum Fan (42) und einer Drehzahl einer Komponente des Gasturbinentriebwerks (20).

10. System nach Anspruch 9, wobei der statische Einlassluftstromdruck (Ps_inl_ave) ein Durchschnitt aus einer Vielzahl von statischen Einlassluftströmungsdrücken ist, die einer Vielzahl von Drehzahlen (N1) des Fans (42) entsprechen.

11. System nach Anspruch 9 oder 10, wobei die Verarbeitungsschaltung (202) konfiguriert ist zum:
während eines simulierten Tests des Gasturbinentriebwerks (20), das dem Satz von Seitenwindbedingungen (104) ausgesetzt ist, Bestimmen des statischen Einlassluftstromdrucks (Ps_inl_ave) am Referenzbereich (66) basierend auf einem Triebwerksleistungsmodell (106).

12. System nach einem der Ansprüche 9 bis 11, wobei die Verarbeitungsschaltung (202) konfiguriert ist zum:
während eines Prüfstandtests oder eines tatsächlichen Rollbahnverfahrens, Bestimmen des statischen Einlassluftstromdrucks am Referenzbereich (66) basierend auf gemessenen Betriebsdaten des Gasturbinentriebwerks (20) oder dessen zugehörigem Antriebssystem (142).

13. System nach einem der Ansprüche 9 oder 12, wobei die Benachrichtigung (122) eine Angabe umfasst, dass ein Design des Fans (42) abgelehnt wird.

14. System nach einem der Ansprüche 9 bis 13, wobei:
der statische Einlassluftstromdruck (Ps_inl_ave) während des Rollbahnbetriebs eines Luftfahrzeugs bestimmt wird, das das Gasturbinentriebwerk (20) umfasst und dem Satz von Seitenwindbedingungen (104) ausgesetzt ist; und
die Einlassluftstromverzerrungsbenachrichtigung (122) eine Empfehlung an einen Piloten eines Luftfahrzeugs, das das Gasturbinentriebwerk (20) umfasst, enthält, einen Rollstart-Takeoff durchzuführen.

15. System nach einem der Ansprüche 9 bis 14, wobei die Verarbeitungsschaltung (202) konfiguriert ist, während eines tatsächlichen Rollbahnverfahrens den Schwellenwert (D_thresh) ferner basierend auf einer aktuellen Rollbahngeschwindigkeit eines Luftfahrzeugs zu bestimmen, das das Gasturbinentriebwerk (20) umfasst.

## Revendications

1. Procédé de surveillance de la distorsion de l'écoulement d'air d'admission d'un moteur à turbine à gaz, comprenant :
le calcul d'une valeur de distorsion de l'écoulement d'air d'admission au niveau d'une zone de référence (66) à l'intérieur d'un conduit d'écoulement d'air (63) d'un moteur à turbine à gaz (20) et en amont d'une soufflante (42) du moteur à turbine à gaz (20), la valeur de distorsion de l'écoulement d'air d'admission étant indicative d'une pression d'air d'un tourbillon d'air (60) au niveau de la zone de référence (66) causé par un ensemble de conditions de vent de travers (104), ledit calcul étant basé sur un rapport (108) entre une pression d'air statique de l'écoulement d'air d'admission (Ps_inl_ave) dans la zone de référence (66) et une pression d'air ambiant totale (Pamb) ;
la comparaison de la valeur de distorsion de l'écoulement d'air d'admission à un seuil (D_thresh) correspondant à une quantité admissible de distorsion de l'écoulement d'air d'admission au niveau de la zone de référence (66) pour l'ensemble de conditions de vent de travers (104) ; et
sur la base de la comparaison (120) indiquant que la distorsion de l'écoulement d'air d'admission dépasse le seuil (D_thresh), la fourniture d'une notification de distorsion de l'écoulement d'air d'admission (122) ; **caractérisé en ce que** le seuil (D_thresh) est déterminé sur la base de l'ensemble de conditions de vent de travers (104), d'une grandeur de l'écoulement d'air vers la soufflante (42), et d'une vitesse de rotation d'un composant du moteur à turbine à gaz (20).

2. Le procédé de la revendication 1, dans lequel la pression d'air statique de l'écoulement d'air d'admission (Ps_inl_ave) est une moyenne d'une pluralité de pressions statiques de l'écoulement d'air d'admission correspondant à une pluralité de vitesses de rotation (N1) de la soufflante (42).

3. Le procédé de la revendication 1 ou 2, dans lequel, pendant un essai simulé du moteur à turbine à gaz (20) soumis à l'ensemble de conditions de vent de travers (104), la pression d'air statique de l'écoulement d'air d'admission (Ps_inl_ave) au niveau de la zone de référence (66) est déterminée sur la base d'un modèle de performance du moteur (106).

4. Le procédé de l'une quelconque des revendications précédentes, dans lequel la notification (122) comprend une indication selon laquelle une conception de la soufflante (42) est rejetée.

5. Le procédé de l'une quelconque des revendications précédentes, dans lequel, pendant un essai au banc ou une procédure réelle sur piste, la pression statique de l'écoulement d'air d'admission au niveau de la zone de référence (66) est déterminée sur la base de données opérationnelles mesurées provenant du moteur à turbine à gaz (20) ou de son système de groupe motopropulseur associé (142).

6. Le procédé de l'une quelconque des revendications précédentes, dans lequel :
la pression d'air statique de l'écoulement d'air d'admission (Ps_inl_ave) est déterminée pendant un fonctionnement sur piste d'un aéronef comprenant le moteur à turbine à gaz (20) et soumis à l'ensemble de conditions de vent de travers (104) ; et
la notification de distorsion de l'écoulement d'air d'admission (122) comprend une recommandation adressée à un pilote d'un aéronef comprenant le moteur à turbine à gaz (20) d'effectuer un décollage avec roulage préalable.

7. Le procédé de l'une quelconque des revendications précédentes, dans lequel, pendant une procédure réelle sur piste, le seuil (D_thresh) est déterminé en outre sur la base d'une vitesse de roulage actuelle d'un aéronef comprenant le moteur à turbine à gaz (20).

8. Le procédé de l'une quelconque des revendications précédentes, dans lequel le calcul de la valeur de distorsion de l'écoulement d'air d'admission au niveau d'une zone de référence (66) est basé sur un carré d'un rapport (108) entre une pression d'air statique de l'écoulement d'air d'admission (Ps_inl_ave) au niveau de la zone de référence (66) et une pression d'air ambiant totale (Pamb).

9. Système de surveillance de la distorsion de l'écoulement d'air d'admission d'un moteur à turbine à gaz, comprenant :
un circuit de traitement (202) connecté de manière opérationnelle à une mémoire (204), le circuit de traitement (202) étant configuré pour :
calculer une valeur de distorsion de l'écoulement d'air d'admission au niveau d'une zone de référence (66) à l'intérieur d'un conduit d'écoulement d'air (63) d'un moteur à turbine à gaz (20) et en amont d'une soufflante (42) du moteur à turbine à gaz (20), la valeur de distorsion de l'écoulement d'air d'admission étant indicative d'une pression d'air d'un tourbillon d'air (60) au niveau de la zone de référence (66) causé par un ensemble de conditions de vent de travers (104), le calcul étant basé sur un rapport (108) entre une pression d'air statique de l'écoulement d'air d'admission (Ps_inl_ave) au niveau de la zone de référence (66) et une pression d'air ambiant totale (Pamb) ;
comparer la valeur de distorsion de l'écoulement d'air d'admission à un seuil (D_thresh) correspondant à une quantité admissible de distorsion de l'écoulement d'air d'admission au niveau de la zone de référence (66) pour l'ensemble de conditions de vent de travers (104) ; et
sur la base de la comparaison (120) indiquant que la distorsion de l'écoulement d'air d'admission dépasse le seuil (D_thresh), fournir une notification de distorsion de l'écoulement d'air d'admission (122) ; et
**caractérisé en ce que** le circuit de traitement (202) est en outre configuré pour :
déterminer le seuil (D_thresh) sur la base de l'ensemble de conditions de vent de travers (104), d'une grandeur de l'écoulement d'air vers la soufflante (42), et d'une vitesse de rotation d'un composant du moteur à turbine à gaz (20).

10. Le système de la revendication 9, dans lequel la pression d'air statique de l'écoulement d'air d'admission (Ps_inl_ave) est une moyenne d'une pluralité de pressions statiques de l'écoulement d'air d'admission correspondant à une pluralité de vitesses de rotation (N1) de la soufflante (42).

11. Le système de la revendication 9 ou 10, dans lequel le circuit de traitement (202) est configuré pour :
pendant un essai simulé du moteur à turbine à gaz (20) soumis à l'ensemble de conditions de vent de travers (104), déterminer la pression d'air statique de l'écoulement d'air d'admission (Ps_inl_ave) au niveau de la zone de référence (66) sur la base d'un modèle de performance du moteur (106).

12. Le système de l'une quelconque des revendications 9 à 11, dans lequel le circuit de traitement (202) est configuré pour :
pendant un essai au banc ou une procédure réelle sur piste, déterminer la pression statique de l'écoulement d'air d'admission au niveau de la zone de référence (66) sur la base de données opérationnelles mesurées provenant du moteur à turbine à gaz (20) ou de son système de groupe motopropulseur associé (142).

13. Le système de l'une quelconque des revendications 9 ou 12, dans lequel la notification (122) comprend une indication selon laquelle une conception de la soufflante (42) est rejetée.

14. Le système de l'une quelconque des revendications 9 à 13, dans lequel :
la pression d'air statique de l'écoulement d'air d'admission (Ps_inl_ave) est déterminée pendant un fonctionnement sur piste d'un aéronef comprenant le moteur à turbine à gaz (20) et soumis à l'ensemble de conditions de vent de travers (104) ; et
la notification de distorsion de l'écoulement d'air d'admission (122) comprend une recommandation adressée à un pilote d'un aéronef comprenant le moteur à turbine à gaz (20) d'effectuer un décollage avec roulage préalable.

15. Le système de l'une quelconque des revendications 9 à 14, dans lequel le circuit de traitement (202) est configuré pour, pendant une procédure réelle sur piste, déterminer le seuil (D_thresh) en outre sur la base d'une vitesse de roulage actuelle d'un aéronef comprenant le moteur à turbine à gaz (20).
